# EUROPEAN PATENT APPLICATION

(11) **EP 2 874 337 A1**
(43) Date of publication of application: **20.05.2015**
(21) Application number: 13290286.7
(22) Date of filing: 15.11.2013
(51) Int. Cl.: H04J 3/12, H04L 12/703

(54) **Method for operating an optical transport network node**

(71) Applicant: ALCATEL LUCENT, 92100 Boulogne-Billancourt (FR)
(72) Inventor: Meyer, Gerhard, 70435 Stuttgart (DE); Hessler, Peter, 70435 Stuttgart (DE)
(74) Representative: DREISS Patentanwälte PartG mbB

(57) **Abstract**

It is proposed a method for operating an optical transport network node of an optical transport network to provide Shared Mesh Protection on an optical data unit level or to provide m:n linear protection on an optical data unit level. An analysis means (2) determines a memory address (4) of pre-calculated configuration data (6) residing on a memory (8) of the optical transport network node. A transmission means (10) of the optical transport network node is reconfigured with the pre-calculated configuration data (6) at the memory address (4) such that a normal traffic signal is transported via a protection transport entity.

## Description

### Field of the invention

The invention relates to a method for operating an optical transport network node.

### Background

Shared Mesh Protection (SMP) is a method to provide and improve availability of the services of an Optical Transport Network (OTN). SMP provides many services which are protected by a few shared protecting resources. Protection switch performance requirements are difficult to meet.

### Summary

In view of the prior art, it is an object of the disclosure to improve switching times, especially of less than 50 ms, across an OTN in case of SMP or a m:n protection scheme. According to an embodiment, this object is achieved by reconfiguring a transmission means of the network node with pre-calculated configuration data.

In an embodiment a memory address is determined depending on an identification value, wherein the identification value is provided via an automatic protection switch protocol (APS). This allows a reconfiguration of the transmission means without further calculations and memory mapping activities.

In an embodiment a triple of a port, a leading tributary slot and/or an index unambiguously identifies the configuration data.

In an embodiment the optical transport network node is a source end and/or a sink end. The optical transport network node comprises a central switch matrix, especially on a switch card. A sink function and/or a source function and/or a monitoring function is placed before the selector or behind the bridge as implemented by the central switch matrix of the optical transport network node, representing the physical architecture. In a logical transmission model, the former functions should be placed behind the selector of before the bridge. This mismatch between the positions of selector and bridge functions in the logical transmission model and the actual physical architecture of the optical transport network node is compensated by the pre-calculated configuration data that also resides in the memory of the optical transport network node.

### Brief description of the figures

Further features, aspects and advantages of the present invention are given in the following detailed description with reference to the drawings in which:
- Figure 1: is a schematic depiction of a method for operating an optical transport network node;
- Figure 2: is a schematic depiction of an optical transport network;
- Figure 3: is a schematic depiction of an optical transport network node; and
- Figure 4 and 5: show a schematic block diagram, respectively.

### Description of the embodiments

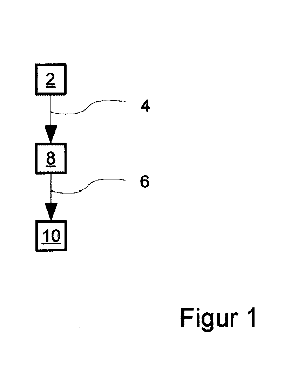

Figure 1 shows a schematic depiction of a method for operating an optical transport network node to provide Shared Mesh Protection (SMP) on an optical data unit (ODU) level, also referred to as ODU-SMP. An analysis means 2 determines a memory address 4 of configuration data 6 residing on a memory 8 of the optical transport network node. A transmission means 10 of the optical transport network node is reconfigured with the configuration data 6 such that a normal traffic signal is transported via a protection transport entity. Protection is the use of pre-assigned capacity between nodes. The simplest architecture has one dedicated protection entity for each working entity (1+1), e.g. 1+1 ODU-k SNCP (Sub Network Connection Protection). The methods described herein are also applicable to shared protection schemes which have m protection entities shared amongst n working entities (m:n). ODU-SMP can be seen as an even more generic m:n protection scheme however with supporting protocols via the APS channel to coordinate the protection switching across several intermediate nodes. The methods described herein are therefore also applicable to the source end nodes and sink end nodes of a linear m:n protection scheme.

The determination of the memory address 4 by the analysis means 2 and the subsequent reconfiguration of the transmission means 10 are triggered by a protection switch event. A protection switch event exists if either a fault condition on a working transport entity or an external command exists, and the protection algorithm has concluded that this fault condition or external command is the highest priority event. The protection switch event is either an automatic protection switching (APS) identification value or an operator command or a signal fail (SF) or signal degrade (SD) condition on a normal signal. The protection switch event comprises a trigger to start the determination of the memory address 4. The trigger identification value is provided either via an Automatic Protection Switching (APS) channel of the Optical Transport Network (OTN) passing a line card and/or via SF/SD condition in a normal traffic signal and/or via a command from an operator interface. The automatic protection switch (APS) channel is used to carry information between network elements to coordinate the bridge and selectors/switch decisions in all nodes and in both directions in the case of bidirectional protection, wherein the functions of a selector are implemented on the matrix.

Signals in general are services which are called payloads carried across a network. This includes traffic signal(s), optionally an extra traffic signal, and null signals (in case no service to be carried). A transport entity is a logical concept, which transfers information between its inputs and outputs within a layered network. Examples are: trail, network connection, subnetwork connection, link connection. A normal traffic signal is a traffic signal that can be protected by two or more alternative transport entities, the working and protection transport entities.

An extra traffic signal is a traffic signal that is carried over the protection transport entity and/or bandwidth when that transport entity/bandwidth is not being used for the protection of a normal traffic signal; i.e., when the protection transport entity is on standby. Whenever the protection transport entity/bandwidth is required to protect or restore the normal traffic via the protection entity, the extra traffic is pre-empted. Extra traffic is not protected.

An entity, for example in [ITU-T G.873.1], describes a transport entity connected between a source and a sink of the protection group. In linear protection, there is at least one protection entity and one or more working entities. The protection entity is always numbered "0". In 1+1 protection, the working entity is numbered "1". In 1:n ODUk protection, the working entities may be assigned numbers from 1-254. A transport entity protection is a method that allows transporting a traffic signal via more than one pre-assigned transport entity. The transport of a normal traffic signal via a working transport entity is replaced by the transport of this normal traffic signal via a protection transport entity if the working transport entity fails (SF condition), or if its performance falls below a required level (SD condition).

An optical channel data unit (ODUk) is an information structure consisting of the information payload (OPUk) and ODUk-related overhead. See [ITU-T G.709] for the current valid values of k.

An optical channel data unit-k path (ODUk path) (ODUkP) is:
1) (as used in [ITU-T G.709]): The optical channel data unit-k path (ODUkP) is the information structure used to support the end-to-end ODUk trail; or
2) (as used in [ITU-T G.8201]): An ODUk path is a trail carrying an OPUk payload and associated OPUk and ODUk overhead through the layered optical transport network between the ODUk path terminating equipment. An ODUk path may be bidirectional or unidirectional and may comprise both customer owned portions and network operator owned portions.

An optical channel payload unit (OPUk) is the information structure used to adapt client information for transport over an optical channel. It comprises client information together with any overhead needed to perform rate adaptation between the client signal rate and the OPUk payload rate, and other OPUk overheads supporting the client signal transport. See [ITU-T G.709] for the current valid values of k.

An optical channel transport unit (OTUk[V]) is the information structure used for transport of an ODUk over an OCh trail. See [ITU-T G.709] for the current valid values of k.

A working transport entity is a transport entity over which the normal traffic signal is transported. A protection transport entity is a transport entity allocated to transport the normal traffic signal during a switch event. The protection transport entity may be used to carry extra traffic in the absence of a switch event. When there is a switch event, normal traffic on the affected working transport entity is bridged onto the protection transport entity, pre-empting the extra traffic (if present). A standby transport entity is a transport entity from which the protection selector does not select the normal traffic signal.

In the ODU-SMP (Optical Data Unit Shared Mesh Protection) described herein, a protection transport entity does not pre-exist, but is pre-assigned and pre-calculated from a chain of protection segments when the respective protection transport entity is activated by a protection switch event also referred to as a trigger. The protection segments are therefore shared by several protection transport entities associated with various normal traffic signals and extra traffic signals.

The presented optical transport network node provides protection switching operation with an associated protocol for shared mesh protection (SMP) at an Optical Channel Data Unit (ODU) level or an associated protocol for m:n linear protection. The shared mesh protection (SMP) mechanism uses pre-computed protection paths that are pre-configured into the optical transport network nodes by means of respective configuration data. These protection paths, also referred to as protection transport entities, are activated when necessary via data plane protocol operations. ODU SMP provides a shared mesh protection scheme for the ODU layer network operating on an end-to-end ODU path or ODU tandem connection (TC). The SMP mechanism is based on pre-computed protection paths that are pre-configured into the network elements. Pre-configuring but not activating the protection paths allows the link connections in a protection path to be shared by multiple working paths. Protection paths are activated in response to network failures by means of a protocol that operates in the data plane. Because link connections within a protection path may be shared, SMP is always revertive. In ODU SMP, a working path may have one or more protection paths. A link connection within a protection path may provide protection for one or more working paths. An ODU node can be the endpoint of the SMP domain for a number of normal traffic signals and it will provide ODU TCM (Tandem Connection Monitoring) endpoints for their working connections. It will also provide potential ODU TCM endpoints for their protection connections. An ODU node can also be an intermediate point of the SMP domain for a number of working and protection connections. A working connection may be protected by multiple protection connections.

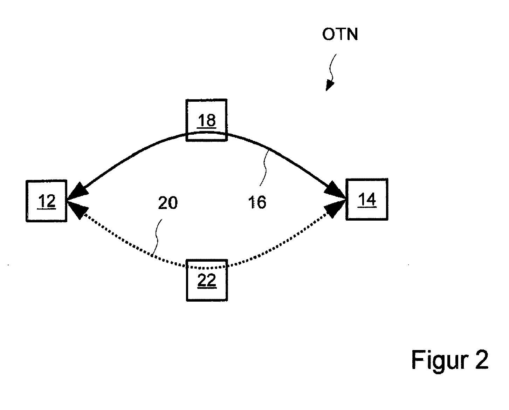

Figure 2 shows a schematic depiction of an optical transport network (OTN) with two source/sink nodes 12 and 14, and two intermediate nodes 18 and 22. An optical transport network (OTN) is composed of a set of optical network elements connected by optical fibre links, able to provide functionality of transport, multiplexing, routing, management, supervision and survivability of optical channels carrying normal traffic signals. A working transport entity 16 connects the source/sink nodes 12 and 14 through the intermediate node 18 in a bi-directional way. A protection transport entity 20 protecting the working transport entity 16 connects the source/sink nodes 12 and 14 through the intermediate node 22. All nodes 12, 14, 18 and 22 are also referred to as an optical transport network node, respectively. The intermediate nodes 18, 22 are nodes on either the working transport entity physical route or the protection transport entity physical route in-between the source and sinks nodes 12, 14 of a corresponding protected domain. The protected domain defines one or more transport entities (trails, subnetwork connections), for which a survivability mechanism is provided in the event of impairment affecting that or those transport entities. It begins from the selector/bridge of one endpoint to the selector/bridge of the other endpoint.

A sink node is a node at the egress of a protected domain, where a normal traffic signal may be selected from either the working transport entity or the protection transport entity. A source node is a node at the ingress to a protected domain, where a normal traffic signal may be bridged to the protection transport entity.

A normal traffic signal can be either an end-user service signal or a maintenance signal. The maintenance signal is a signal with an ODU-k structure but not yet filled with an end-user service and the respective payload.

In an embodiment a 1+1 protection architecture has one normal traffic signal, one working transport entity 16, one protection transport entity 20 and a permanent bridge. At the source end 12, the normal traffic signal is permanently bridged to both the working and the protection transport entities 16, 22. At the sink end 14, the normal traffic signal is selected from the better of the two transport entities 18, 22. Due to the permanent bridging, the 1+1 (protection) architecture does not allow an unprotected extra traffic signal to be provided.

In an embodiment an 1:n protection architecture (n ≥ 1) has n normal traffic signals which are transported over n working transport entities 16 and one protection transport entity 20. It may have extra normal traffic signals. At the source end 12, a normal traffic signal is either permanently, or is connected to either its working or the protection transport entity 16, 20 (in the case of a selector bridge). At the sink end 14, the normal traffic signal is selected from either the working or the protection transport entity 16, 20. An unprotected extra normal traffic signal can be transported via the protection transport entity 20, whenever the protection transport entity is not used to carry a normal traffic signal.

In an embodiment an m:n protection architecture (1:1 is a special case of m:n) has n normal traffic signals which are transported over n working transport entities 16 and m protection transport entities 20. It may have up to m extra traffic signals. At the source end 12, a normal traffic signal is either permanently connected to its working transport entity 16 and may be connected to one of the protection transport entities 20 (in the case of a broadcast bridge), or is connected to either its working or one of the protection transport entities 16, 20. At the sink end 14, the normal traffic signal is selected from either its working or one of the protection transport entities 16, 20. Up to m unprotected extra traffic signals can be transported via the m protection transport entities 20 whenever the protection transport entities 20 are not used to carry a normal traffic signal.

Trail protection comprises transport entity protection for the case where the transport entity is a trail. The trail is protected by adding bridges and selectors at both ends of the trail, and an additional trail between these bridges and selectors. The determination of a fault condition on a trail within the protected domain is performed by means of trail monitoring.

A hold-off time is the time between the declaration of a signal fail (SF) or signal degrade (SD) condition and the initialization of the protection switching algorithm. A detection time is a time between the occurrence of the fault or degradation and its detection as a defect condition and consequential activation of SF or SD condition. A switching time is the time between the occurrence of the fault and the moment the normal traffic is transported by the protection transmission entity.

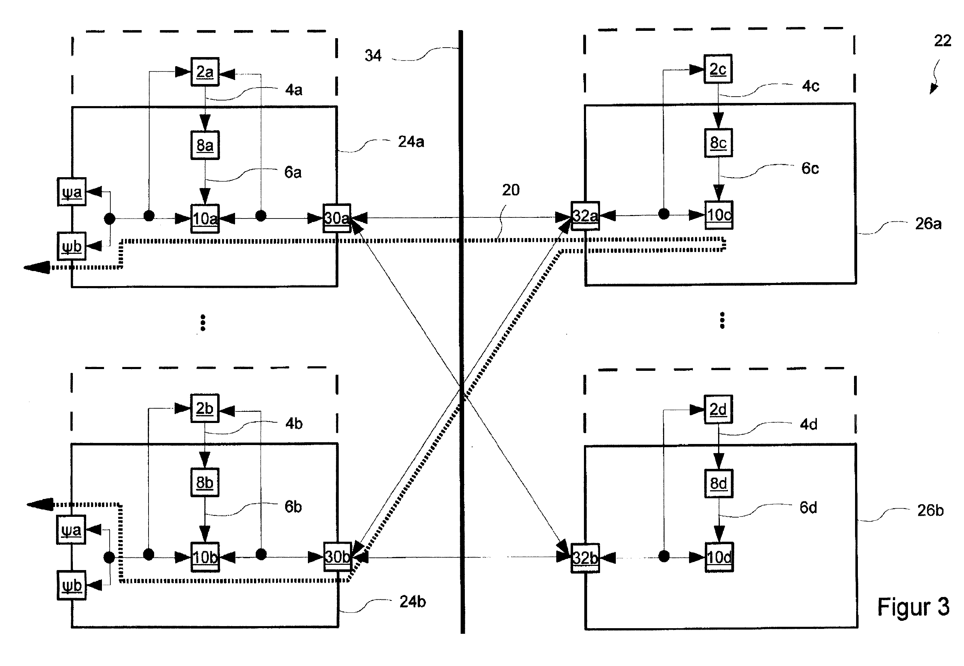

Figure 3 shows a schematic depiction of the optical transport network node 22. The protection transport entity 20 passes through the node 22. The node 22 comprises two or more line cards 24a, 24b and two or more switch cards 26a, 26b. The line card 24 comprises one or more ports ψa, ψb, each representing an optical transport network node interface (ONNI) which is used to interconnect with another optical transport network node. The line card 24 comprises a backplane interface 30. The line card 24 comprises the analysis means 2, the memory 8 and the transmission means 10. The transmission means 10 of the line card 24 is referred to as a framer that may include a protocol processor and is implemented for example as an field programmable array (FPGA) or an application specific integrated circuit (ASIC).

The switch card 26 comprises a backplane interface 32, the analysis means 2, the memory 8 and the transmission means 10. The transmission means 10c represents one or more switch devices. Two or more line cards 24 can be interconnected to at least one switch card 26 across backplane 34. The line card framer 10 may communicate directly with a switch card 26 via backplane 34 or may communicate with another line card 24 via backplane 34. Bidirectional arrows between the line cards 24 and the switch cards 26 generally represent electrical links, which may involve multiple traces.

As indicated by the dashed lines of the line cards 24a, 24b and the switch cards 26a, 26b the respective analysis means 2 can be arranged at another entity of the node. Especially only one line card 24 can comprise the analysis means 2 and determine the respective memory addresses 4 for the other line card 24 and the switch card 26.

The analysis means 2 of the line card 24 observes the APS channel and the working and protecting signal quality of the ODUs between a ONNI port ψ and/or between the transmission means 10 and the backplane interface 30 and/or in ingress direction. Depending on the preceding analysis and/or depending on the presence of a command a protection switch event can be derived which determines the memory address 4.

In the embodiment shown in figure 3 the pre-allocated protection transport entity 20 is active. The granularity of pre-allocation of protection bandwidth in ODU-SMP is a 1.25 GBit/s tributary slot. A set of these tributary slots constitutes the bandwidth of a protection transport entity, which is the same bandwidth as the working transport entity it is protecting. The first tributary slot of this bandwidth with the lowest tributary slot identification is the leading tributary slot v.

In an embodiment per ONNI port ψ a leading tributary slot ν is reserved for protection purposes and the leading tributary slot ν may be reserved for 1...Sν protection transport entities. Sν is the factor of oversubscription per leading tributary slot ν for the ONNI port ψ. An index µ is used to address the respective configuration data for the 1...Sν protection transport entities.

The leading tributary slot ν may be reserved for extra traffic signals which may use the bandwidth of the respective leading tributary slot ν while it is not used to protect a normal traffic signal. Eν is the number of extra traffic signals sharing this leading tributary slot ν. An index µ is used to address the respective configuration data.

In an embodiment configuration data is provided for the 1...Sν normal traffic signals and the 1...Eν extra traffic signals. An index µ is used to identify the respective configuration data out of the 1... (Sν+Eν) for the activation of a specific protection transport entity or an extra traffic signal.

In an embodiment a triple (ψ, v, µ) identifies configuration data and a memory address can be determined by the triple (ψ, v, µ).

In an embodiment the triple (ψ, v, µ) is identified by an APS identification which is unique in the ODU-SMP domain and passes the respective optical transport network node. Therefore the respective protection entity is activated by means of configuring the optical transport network node with the configuration data identified by the triple identified by the APS identification.

The protection transport entity is deactivated by an APS message that indicates no protection request. This will also allow Extra Traffic to be re-established on each of the unused protection segments.

In an embodiment the optical transport network node is an intermediate node. The configuration data characterizes the structure of the lower order optical data unit (LO ODU) of a protection transport entity or of an extra traffic signal. The configuration data is a list of tributary slot identifications, and the reconfiguration may include a transition from non-terminated ODUk in OTUk into terminated ODUk with LO ODUj.

In another embodiment the optical transport network node is an intermediate node. The configuration data describes a protection transport entity or an extra traffic signal of rate ODUk that completely consumes the OTUk. The related reconfiguration may include a transition from terminated ODUk with LO ODUj into non-terminated ODUk in OTUk.

In a further embodiment the configuration data comprises the settings of high order ODUk termination functions for server trails, e.g. a Trail Trace Identifier (TTI).

In an embodiment the optical transport network node is a source end and the optical transport network node comprises a physical central switch matrix, especially on a switch card. A source function and/or a monitoring function are placed behind the bridge of the central switch matrix. Monitoring functions may comprise a connectivity supervision with set of processes for monitoring the integrity of the routing of the connection between source and sink trail terminations.

In an embodiment the optical transport network node is a sink end and the optical transport network node comprises a physical central switch matrix, especially on a switch card. A sink function and/or a monitoring function is placed before a selector of the central switch matrix.

The embodiments according to the source end and the sink end may also be used in a 1:1 protection scheme, where only the source end and the sink end have to be reconfigured on a protection switch.

A bridge is a function that connects the normal traffic signals to the working and protection transport entities. A permanent bridge for a 1+1 architecture connects the normal traffic signal to both the working and protection entities. For 1:n or m:n protection architectures, the bridge permanently connects the normal traffic signal to the working transport entity. In the event of protection switching, the normal traffic signal is additionally connected to the protection transport entity. The extra traffic signal is either not connected or connected to the protection transport entity.

A selector is a function that extracts the normal traffic signal either from the working or the protection transport entity. The extra traffic signal is either extracted from the protection transport entity, or is not extracted; in the latter case, an AIS signal will be output. The selector function is done in the central switch matrix.

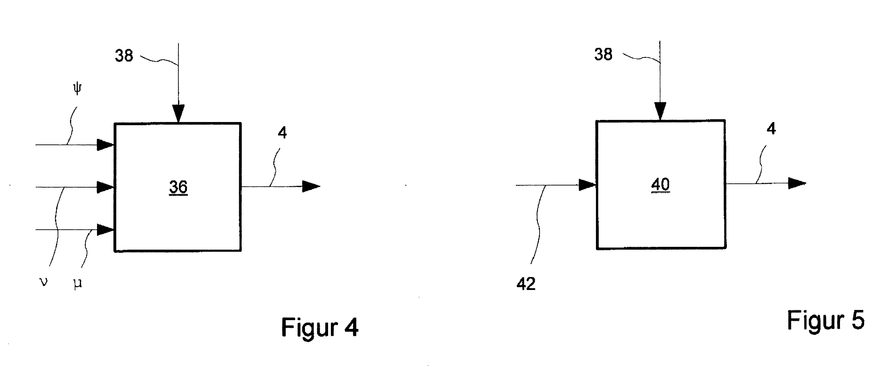

Figure 4 shows a schematic block diagram. A block 36 determines the memory address 4 upon receipt of the trigger 38 which is part of the protection switch event based on the triple (ψ, ν, µ).

Figure 5 shows a schematic block diagram. The block 40 determines the memory address 4 upon receipt of the trigger 38 which is part of the protection switch event based on a APS identification value 42. The block 36 may be part of the block 40, wherein the triple (ψ, ν, µ) is determined based on the APS identification value 42. The blocks 36 and/or 40 are part of an analysis means 2.

The respective node determines the affected protection transport entity or Extra Traffic signal from the respective ID in the APS message received via the ingress port. As the routes are pre-configured, the node also knows via which egress port it has to forward the APS message to the next node.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method for operating an optical transport network node (12; 14; 18; 22) of an optical transport network (OTN) to provide Shared Mesh Protection (SMP) on an optical data unit (ODU) level or to provide m:n linear protection on an optical data unit (ODU) level, wherein an analysis means (2) determines a memory address (4) of pre-calculated configuration data (6) residing on a memory (8) of the optical transport network node (12; 14; 18; 22), wherein a transmission means (10) of the optical transport network node (12; 14; 18; 22) is reconfigured with the pre-calculated configuration data (6) at the memory address (4) such that a normal traffic signal is transported via a protecting transport entity (20).

2. The method of claim 1, wherein the memory address (4) is determined depending on an identification value (42), wherein the identification value (42) is provided via an automatic protection switch protocol (APS).

3. The method of claim 1 or 2, wherein the memory address (4) is determined depending on an optical transport network node interface (ONNI) port (ψ) of the optical transport network node (12; 14; 18; 22) and/or depending on a leading tributary slot (v) and/or an index (µ).

4. The method of claim 3, wherein the index (µ) has a maximum given by the sum of an upper limit of oversubscription per leading tributary slot (v) and a number of Extra Traffic Signals sharing the respective leading tributary slot (v).

5. The method of claim 1 and 3 or claim 1 and 4, wherein the optical transport network node interface (ONNI) port (ψ) and/or the leading tributary slot (v) and/or the index (µ) are determined depending on the APS identification value (42).

6. The method of one of the preceding claims, wherein the optical transport network node (12; 14) is a source end and/or a sink end, wherein the optical transport network node (12; 14) comprises a central switch matrix, especially on a switch card (26), wherein a sink function and/or a source function and/or a monitoring function is placed before the selector or behind the bridge as implemented by the central switch matrix of the optical transport network node (12; 14).

7. The method of one of the claims 1 to 5, wherein the method provides Shared Mesh Protection (SMP), wherein the optical transport network node (18; 22) is an intermediate node or a source end and/or a sink end node, and wherein the selected configuration data (6) describes a tributary slot structure of a lower order optical data units (LO ODU) within a higher order optical data unit (HO ODU).

8. The method according to one of the preceding claims, wherein the determination of the memory address (4) by the analysis means (2) and the subsequent reconfiguration of the transmission means (10) is triggered by a protection switch event.

9. The method according to claim 8, wherein the protection switch event comprises a trigger (38) and the APS identification value (42), wherein the trigger (38) and/or the APS identification value (42) are provided via an Automatic Protection Switching (APS) channel of the Optical Transport Network (OTN) passing the line card (24), or by another communication channel passing the optical transport network node (12; 14) such as a message via a further signalling link or a message via hardware based in-band signalling.

10. The method according to one of the preceding claims, wherein the transmission means (10) is a processor of a line card (24), and/or a mapper device on a line card (24), and/or a central switch matrix of a switch card (26).

11. Optical transport network node (12, 14, 18, 22) configured to perform one of the methods of the preceding claims.

## Amended claims

### Amended claims in accordance with Rule 137(2) EPC.

1. A method for operating an optical transport network node (12; 14; 18; 22) of an optical transport network, OTN, to provide Shared Mesh Protection, SMP, on an optical data unit, ODU, level or to provide m:n linear protection on an optical data unit, ODU, level, **characterized in that** an analysis means (2) determines a memory address (4) of pre-calculated configuration data (6) residing on a memory (8) of the optical transport network node (12; 14; 18; 22), and that a transmission means (10) of the optical transport network node (12; 14; 18; 22) is reconfigured with the pre-calculated configuration data (6) at the memory address (4) such that a normal traffic signal is transported via a protecting transport entity (20).

2. The method of claim 1, wherein the memory address (4) is determined depending on an identification value (42), wherein the identification value (42) is provided via an automatic protection switch protocol, APS.

3. The method of claim 1 or 2, wherein the memory address (4) is determined depending on an optical transport network node interface, ONNI, port (ψ) of the optical transport network node (12; 14; 18; 22) and/or depending on a leading tributary slot (v) and/or an index (µ).

4. The method of claim 3, wherein the index (µ) has a maximum given by the sum of an upper limit of oversubscription per leading tributary slot (v) and a number of Extra Traffic Signals sharing the respective leading tributary slot (v).

5. The method of claim 1 and 3 or claim 1 and 4, wherein the optical transport network node interface, ONNI, port (ψ) and/or the leading tributary slot (v) and/or the index (µ) are determined depending on the APS identification value (42).

6. The method of one of the preceding claims, wherein the optical transport network node (12; 14) is a source end and/or a sink end, wherein the optical transport network node (12; 14) comprises a central switch matrix, especially on a switch card (26), wherein a sink function and/or a source function and/or a monitoring function is placed before the selector or behind the bridge as implemented by the central switch matrix of the optical transport network node (12; 14).

7. The method of one of the claims 1 to 5, wherein the method provides Shared Mesh Protection, SMP, wherein the optical transport network node (18; 22) is an intermediate node or a source end and/or a sink end node, and wherein the selected configuration data (6) describes a tributary slot structure of a lower order optical data units, LO ODU, within a higher order optical data unit ,HO ODU.

8. The method according to one of the preceding claims,
wherein the determination of the memory address (4) by the analysis means (2) and the subsequent reconfiguration of the transmission means (10) is triggered by a protection switch event.

9. The method according to claim 8, wherein the protection switch event comprises a trigger (38) and the APS identification value (42), wherein the trigger (38) and/or the APS identification value (42) are provided via an Automatic Protection Switching, APS, channel of the Optical Transport Network, OTN, passing the line card (24), or by another communication channel passing the optical transport network node (12; 14) such as a message via a further signalling link or a message via hardware based in-band signalling.

10. The method according to one of the preceding claims, wherein the transmission means (10) is a processor of a line card (24), and/or a mapper device on a line card (24), and/or a central switch matrix of a switch card (26).

11. Optical transport network node (12, 14, 18, 22) comprising means for carrying out the steps of one of the methods of the preceding claims.
